# EUROPEAN PATENT APPLICATION

(11) **EP 2 901 869 A1**
(43) Date of publication of application: **05.08.2015**
(21) Application number: 14153569.0
(22) Date of filing: 31.01.2014
(51) Int. Cl.: A23L 1/315, A23L 1/00, A23L 1/03, A23L 1/0522

(54) **Microwaveable batter**

(71) Applicant: Crisp Sensation Holding SA, 1208 Geneva (CH)
(72) Inventor: Van der Kolk, Bianca, 5212 XH's Hertogenbosch (NL); Michiels, Wilhelmus Johannes Gerardus, 6031GB Nederweert (NL)
(74) Representative: Browne, Robin Forsythe

(57) **Abstract**

A microwaveable batter composition comprises:
a flour component comprising rice flour;
non-modified starch;
alpha-amylase in a concentration of 500-20,000 MAU per kg of the flour component; egg protein;
a gelling agent; and
optional other edible ingredients.

## Description

This invention relates to a coating for foodstuffs, which is cookable or reheatable using a microwave oven, combination microwave oven or by radiant heat by any means. The invention relates particularly but not exclusively to microwaveable cookable or reheatable batters or breaded coatings.

Microwave ovens are commonly used for heating food products, which have been pre-prepared by a foodstuff manufacturer. Pre-prepared products include batter coated foodstuffs in which the basic foodstuff, for example meat, fish, poultry, vegetables, fruit or dairy products, has been coated in a batter optionally coated with crumbs, deep fried and then frozen for supply to a consumer.

Heating in a microwaveable oven may complete the cooking process or simply reheat a previously cooked product. Microwave cookable coatings have particular requirements. Microwave energy penetrates throughout a food product. Steam released from the core of a food product can cause the batter coating to become soggy. This impairs the texture and taste of the product.

WO85/01188 disclosed batters containing high amylose flour for microwaveable prefried foodstuffs. WO 88/06007 disclosed a batter composition and method of preparation wherein the foodstuff is pre-dusted with high amylose starch and methylcellulose. The batter included high enzyme soya flour. WO93/003634 disclosed an improved pre-dust composition including a mixture of particulate starch and particulate cellulose gum, which gelled on heating in the presence of moisture. Such a pre-dust can form a dense, high viscosity barrier to absorption of oil and migration of moisture. The barrier also provides a stable environment for any seasoning and can enhance bonding with the batter. A batter containing high amylose starch and soya flour (including high enzyme soya flour) is disclosed. WO 95/30344 disclosed a microwaveable batter comprising high amylose starch, cellulose gum, flour and enzyme additive. WO96/032026 disclosed a microwaveable batter comprising starch, flour, a gelling agent, an enzyme additive and further ingredients. An exemplified formulation comprised genetically modified high amylose maize flour. WO11/086386 disclosed a microwaveable batter comprising starch, flour, a gelling agent, alpha amylase and optional further ingredients, said flour comprising a mixture of two or more gluten free free flours including maize flour.

It is the object of the present invention to provide a batter coating having improved properties during manufacture, storage, microwave cooking or reheating, and upon consumption.

The inventors have found that a foodstuff batter composition having such improved properties can be obtained by combining water and a number of food ingredients including flour, non-modified starch, egg protein and gelling agent, and by employing alpha-amylase in a specific amount. Furthermore, as will be demonstrated below, the inventors have found that certain types of flours are particularly suitable.

Batter or breaded coatings in accordance with this invention are preferably cookable or reheatable using conventional ovens or fryers in addition to microwave ovens and combination microwave ovens.

According to the present invention a microwave cookable or reheatable batter composition comprises:
water;
flour;
non-modified starch;
alpha-amylase in a concentration of 500-20,000 MAU per kg of the flour component;
a gelling agent;
egg protein; and
optional other edible ingredients.

The acronym MAU refers to maltogenic amylase units.

A method of determining enzyme activity (in AMU) is based upon the capability of the maltogenic amylase to quantitatively cleave maltotriose into equimolar amounts of maltose and glucose. This method is disclosed in US 4598048. The disclosure of US 4598048 is incorporated into this specification by reference for all purposes.

One maltogenic amylase unit (MAU) is defined as the amount of enzyme which under standard conditions cleaves 1 µmol maltotriose per minute. The enzyme reaction is stopped by shifting pH to about 11. The glucose formed is converted into gluconolactone under formation of NADH by means of glucose dehydrogenase (Merck, GlucDH). The amount of NADH formed is measured by colorimetric determination at 340 nm. The standard conditions are:
Temperature 37°C ± 0.05°C; pH 5.0; incubation time 30 min.

In a preferred embodiment, the batter composition contains alpha-amylase in a concentration of 1,200-10,000 MAU per kg flour.

In a further preferred embodiment the batter composition contains alpha-amylase in a concentration of 1,800-8,000 MAU per kg flour.

In a preferred embodiment, the alpha-amylase is a maltogenic alpha-amylase.

In a preferred embodiment, the batter composition comprises 25% to 50% rice flour by weight of dry matter.

The batter composition of the present invention preferably consists of 60 to 85 wt% water and 15 to 40 wt% of dry matter. Even more preferably, the batter composition consists of 70-80 wt% water and 20-30 wt% of the dry matter.

The batter composition preferably comprises rice flour, especially 25% to 50% rice flour by weight of dry matter. Preferably the flour consists only of rice flour. Use of rice flour affords many advantages. Rice flour is gluten free. The absence of gluten is important to provide resistance of the batter coating to passage of water vapour during the cooking processes. Gluten free flours are also non-allergenic. Rice flour batters have superior crispness and better mouthfeel with a harder batter structure in comparison to soya or maize flour containing batters. Rice flour batters also have a clean light colour. The starch chain length is generally shorter making unfolding and hydration easier to give better enzymolysis. Rice flour has smaller granules. Less water is used during manufacture in order to reach optimum viscosity in comparison to soya flour. Rice flour is also widely available in many countries where maize flour is less easily obtained.

In a preferred embodiment, the batter composition comprises 30% to 46% rice flour by weight of dry matter.

In a further preferred embodiment, the batter composition comprises 34% to 46% rice flour by weight of dry matter.

In a further preferred embodiment, the batter composition comprises 36% to 41 % rice flour by weight of dry matter.

In an alternative embodiment, the batter composition may comprise 31% to 41% rice flour by weight of dry matter.

The batter composition typically comprises 20% to 60% non-modified starch by weight of dry matter.

Preferably, the batter composition comprises 30% to 46% non-modified starch by weight of dry matter.

More preferably, the batter composition comprises 34% to 46% non-modified starch by weight of dry matter.

Even more preferably, the batter composition comprises 36% to 41% non-modified starch by weight of dry matter.

Alternatively, the batter composition comprises 31% to 41% non-modified starch by weight of dry matter.

In advantageous embodiments, the flour has a fat content from about 1 wt% to about 8 wt%, preferably about 3 wt%.

In a preferred embodiment, the batter composition comprises 0.1% to 5% of the gelling agent by weight of dry matter. More preferably, the batter composition comprises 0.5% to 3% of the gelling agent.

The batter composition may comprise 5%-25% of egg solids by weight of dry matter, preferably egg solids from egg material selected from whole egg, egg yolk, egg white and combinations thereof.

The batter composition preferably comprises 10-20% by weight of dry matter of egg solids, preferably egg solids from egg material selected from whole egg, egg yolk, egg white and combinations thereof.

Preferably, the batter composition contains 5-15% of egg protein by weight of dry matter.

A particularly advantageous batter composition in accordance with this invention comprises:
20-60 wt.% of flour;
20-60 wt.% of non-modified starch;
alpha-amylase in a concentration of 500-20,000 MAU per kg of flour;
5-15 wt.% of egg protein;
0.2 to 5 wt.% of a gelling agent; and
up to 20 wt.% of optional other edible ingredients.

The percentage in total ingredients of the flour and starch mixture in the present batter composition is important to provide a composition having optimal viscosity or a range of viscosities which may be achieved by adjustment of the dilution of the mixture prior to use dependent on the nature of the substrate to be coated, the water content of the substrate, the adhesive characteristics of the substrate surface and the desired properties of the resultant coating.

The weight ratio of flour to non-modified starch (i.e. non-flour starch) may be in the range of 1:2 to 4:1, preferably of 3:5 to 3:2.

Use of gluten-free flour or low gluten flour is advantageous to avoid formation of a slimy layer or deterioration when frozen, particularly if partially thawed and re-frozen before use. Such as may occur during transportation from a store to a customer's home.

An enzyme component which comprises an alpha-amylase may be present in an amount from about 0.005% to about 0.15%, preferably from about 0.008% to about 0.1%, more preferably about 0.0125% by weight of dry matter. The enzyme component may comprise the enzyme together with a carrier and other inactive ingredients.

In previous formulations, for example as disclosed in WO96/32026, an amount of alpha-amylase of 0.5% to 3% or more was considered necessary. It has been discovered that a batter having improved properties both immediately after manufacture and on long term storage of the batter coated products can be obtained by employing alpha-amylase in a substantially lower concentration.

The enzyme component may be a maltogenic alpha-amylase, for example the thermostable alpha-amylase sold under the registered trade mark Novamyl. Preferred enzyme components include maltogenic amylases, for example, Novamyl BG10000.

The enzyme component is preferably a concentrated enzyme preparation. The enzyme component may comprise the enzyme together with a carrier and other inactive ingredients. Enzyme containing conventional ingredients used in batter, for example high enzyme flours, are inconsistent and are not preferred. However, the concentrated enzyme preparation may be blended with a further ingredient such as starch or flour to facilitate mixing into the composition. The enzyme preparation may contain buffers or stabilizers.

The enzyme component preferably contains only the enzymes required for the batter composition. Lipoxygenases or other enzymes, which may be present in commercial high enzyme flours are preferably avoided since these may give rise to adverse flavours. Proteases may be also excluded from the enzyme component.

Batter compositions in accordance with the present invention provide the advantage that the dry ingredients can be mixed into water to provide a batter which is ready for use after standing for a short period, for example 1 hour. No incubation step at elevated temperature is necessary. This avoids the need for specialist equipment or careful control of the enzymolysis conditions. Alternatively, the gelling agent may be mixed with water and allowed to hydrate before incorporation into the batter formulation. Such a formulation may be used immediately after mixing of the ingredients.

The gelling agent may be selected from the group consisting of: xanthan gum, guar gum, agar gum, gum arabic, locust bean gum, carrageenan and combinations thereof. Preferably, the gelling agent is selected from the group consisting of xanthan gum, guar gum, carrageenan and combinations thereof. Compositions of this invention preferably do not include gelatine. Guar gum is a particularly preferred gelling agent.

The amount of the non-modified starch component, excluding any starch which may be present in the flour, may comprise about 20-50%, more preferably about 22-45%, even more preferably about 30-48% and most preferably about 30-47%, by weight of dry matter.

Advantageously, non-modified starch may comprise about 25-50%, more preferably about 30-46%, even more preferably 36-46% and most preferably about 36-41% by weight of dry matter.

The non-modified starch preferably comprises high amylose starch. In this specification high amylose starch is a starch having an amylose content of at least 50%. Preferably maize starch is used, for example as manufactured under trademark HYLON 7 of National Starch. A high amylose starch having an amylose content of about 60% to about 80%, preferably about 72-77%, is preferred. A hot swell starch may be used.

A reducing sugar or mixture of reducing sugars may be used to give colour to the cooked coating. D-xylose is preferred although fructose, maltose or mixtures of these reducing sugars may be used. Preferably, the batter composition contains D-xylose in an amount of about 1-3% by weight of dry matter, more preferably of about 2% by weight of dry matter.

The gelling agent or thickener (referred to for convenience as a gelling agent) is employed in an amount sufficient to stabilise the batter composition. One or more of the following gelling agents may be employed: xanthan gum, guar gum, agar gum, gum arabic, locust bean gum, or carrageenan. Use of guar gum or mixtures containing guar gum is preferred. For instance, mixtures of guar and xanthan gums may be used. An amount of the gelling agent which is effective to provide a thickened composition may be used. The gelling agent is preferably present in an amount sufficient to give long-term stability, for example to allow the batter to be stored before use.

Monoglyceride, such as glyceryl monostearate, may be used as an emulsifier. Alternative emulsifiers may be used. Advantageously, the batter composition contains emulsifier in an amount of 0.5% to 6% by weight of dry matter, preferably of 1% to 5% by weight of dry matter, preferably about 2% by weight of dry matter.

A phosphate may be employed in the batter composition in an amount of about 0.7% to 3% by weight of dry matter to adjust the pH for optimum enzyme activity. Monosodium phosphate in an amount of about 1.87 % by weight of dry matter is preferred.

The further ingredients preferably include ammonium bicarbonate used as an aid to formulation. An amount of about 0.7% by weight of dry matter is preferred.

Glucono-D-lactone may be used as a slow release pH adjuster. An amount of about 0.67% by weight of dry matter may be employed in the batter composition.

Sodium acid pyrophosphate may be used to regulate pH. An amount of about 0.37% by weight of dry matter may be employed in the batter composition.

A thickener, for example methylcellulose, such as Methocel A4M, may suitably be used in the batter composition in an amount of about 0.1-1% by weight of dry matter, preferably about 0.25% by weight of dry matter.

Use of a batter composition in accordance with this invention confers several advantages. The batter adheres well to a substrate and to subsequently applied crumb. The batter allows escape of moisture during frying but does not give a high degree of fat pickup from the frying oil. A shell-like batter is formed to give a desirably crisp bite.

The gel, batter and crumb form an integral consolidated layer after cooking, e.g. frying.

The viscosity of the batter composition before use is preferably in the range of about 400 to 700 cP, preferably about 550 cP, measured using a Brookfield viscometer with a No 3 spindle at 60 rpm.

Another aspect of the invention relates to a method of coating a microwave cookable or reheatable foodstuff comprising the steps of applying a batter composition as defined herein before to an edible solid substrate, followed by the application of a crumb layer.

A pre-dust or pre-coating may be applied to the substrate before application of the batter composition. A conventional pre-dust may be used but use of an aqueous pre-coating composition is preferred.

In a particularly preferred embodiment, the edible solid substrate is pre-coated with an aqueous pre-coating composition, said aqueous pre-coating composition comprising 97 to 99.7 wt% water and 0.3 to 3.0 wt% dry matter, said dry matter being composed of:
20 to 40 wt.% starch;
10 to 35 wt.% xanthan gum;
5 to 25 wt.% egg albumen; and
up to 50 wt.% of other ingredients;
followed by application of a crumb layer.

Yet another aspect of the invention relates to a microwave cookable or reheatable food composition comprising a batter composition as defined herein or as manufactured by the method defined above.

Amounts and quantities referred to in this specification are by weight unless indicated otherwise. Percentages and other proportions are selected from ranges given to total 100%.

The invention is further described by means of example but not in any limitative sense.

### Example 1

A batter was prepared from a dry premix having the following composition:

| | Wt% |
|---|---|
| Rice flour | 30.8 |
| High amylose starch (Hylon 7) | 46.2 |
| Alpha-amylase (Novamyl 10000 BG US) | 0.0125 |
| Dried whole egg (Henningsen W1) | 14.0 |
| Glyceryl monostearate | 2.0 |
| D-xylose | 2.0 |
| Monosodium phosphate | 1.87 |
| Guar gum | 1.0 |
| Ammonium bicarbonate | 0.71 |
| Glucono-deltalactone | 0.67 |
| Sodium acid pyrophosphate | 0.37 |
| Methylcellulose (Methocel A4M) | 0.25 |

The batter was prepared by mixing 1 part of the dry premix with 3 parts of water at approximately 15°C using a Silverson DX high shear mixer with a slotted disintegrating head at about 4500 rpm for 4 minutes. The mixture was left to stand in a cool place for 1 hour before use.

### Example 2

A batter was prepared from a dry premix as described in the following table, using the procedure described in Example 1.

| | Wt% |
|---|---|
| Rice flour | 35.8 |
| High amylose starch (Hylon 7) | 41.2 |
| Alpha-amylase (Novamyl 10000 BG US) | 0.0125 |
| Dried whole egg (Henningsen W1) | 14.0 |
| Glyceryl monostearate | 2.0 |
| D-xylose | 2.0 |
| Monosodium phosphate | 1.87 |
| Guar gum | 1.0 |
| Ammonium bicarbonate | 0.71 |
| Gluconodeltalactone | 0.67 |
| Sodium acid pyrophosphate | 0.37 |
| Methylcellulose (Methocel A4M) | 0.25 |

### Example 3

A batter was prepared from a dry premix as described in the following table, using the procedure described in Example 1.

| | Wt% |
|---|---|
| Rice flour | 40.8 |
| High amylose starch (Hylon 7) | 36.2 |
| Alpha-amylase (Novamyl 10000 BG US) | 0.0125 |
| Dried whole egg (Henningsen W1) | 14.0 |
| Glyceryl monostearate | 2.0 |
| D-xylose | 2.0 |
| Monosodium phosphate | 1.87 |
| Guar gum | 1.0 |
| Ammonium bicarbonate | 0.71 |
| Glucono-deltalactone | 0.67 |
| Sodium acid pyrophosphate | 0.37 |
| Methylcellulose (Methocel A4M) | 0.25 |

### Example 4

A batter was prepared from a dry premix as described in the following table, using the procedure described in Example 2.

| | Wt% |
|---|---|
| Rice flour | 46.2 |
| High amylose starch (Hylon 7) | 30.8 |
| Alpha-amylase (Novamyl 10000 BG US) | 0.0125 |
| Dried whole egg (Henningsen W1) | 14.0 |
| Glyceryl monostearate | 2.0 |
| D-xylose | 2.0 |
| Monosodium phosphate | 1.87 |
| Guar gum | 1.0 |
| Ammonium bicarbonate | 0.71 |
| Glucono-deltalactone | 0.67 |
| Sodium acid pyrophosphate | 0.37 |
| Methylcellulose (Methocel A4M) | 0.25 |

### Example 5

A batter was prepared from a dry premix having the following composition, using the procedure detailed in Example 1:

| | Wt% |
|---|---|
| Rice flour | 30.8 |
| High amylose starch (Hylon 7) | 46.2 |
| Alpha-amylase (Novamyl 10000 BG US) | 0.0075 |
| Dried whole egg (Henningsen W1) | 14.0 |
| Glyceryl monostearate | 2.0 |
| D-xylose | 2.0 |
| Monosodium phosphate | 1.87 |
| Guar gum | 1.0 |
| Ammonium bicarbonate | 0.71 |
| Glucono-deltalactone | 0.67 |
| Sodium acid pyrophosphate | 0.37 |
| Methylcellulose (Methocel A4M) | 0.25 |

### Example 6

A batter was prepared from a dry premix having the following table, using the procedure described in Example 1.

| | Wt% |
|---|---|
| Rice flour | 30.8 |
| High amylose starch (Hylon 7) | 46.2 |
| Alpha-amylase (Novamyl 10000 BG US) | Nil |
| Dried whole egg (Henningsen W1) | 14.0 |
| Glyceryl monostearate | 2.0 |
| D-xylose | 2.0 |
| Monosodium phosphate | 1.87 |
| Guar gum | 1.0 |
| Ammonium bicarbonate | 0.71 |
| Glucono-deltalactone | 0.67 |
| Sodium acid pyrophosphate | 0.37 |
| Methylcellulose (Methocel A4M) | 0.25 |

### Example 7 - Preparation of frozen chicken nuggets.

A dry stabiliser composition was prepared using the following ingredients:

| | Wt% |
|---|---|
| Methylcellulose (Methocel A4M) | 15 |
| Starch (Thermflo) | 24 |
| Egg albumen | 15 |
| Xanthan gum | 6 |
| Polydextrose | 40 |

A chicken mixture for chicken nuggets was prepared with the following composition using the stabilizer described above:

| | Wt% |
|---|---|
| Chicken 13 to 30 mm | 81 |
| Pan juice | 0.8 |
| Salt | 1.0 |
| Inulin | 2.2 |
| Water | 10.0 |
| Stabiliser (Example 7) | 5.0 |

The chicken pieces were chilled to -3°C and minced using a 10mm plate. After mincing, the temperature was 0-3 °C. Water was added with mixing. A chicken emulsion comprising the following ingredients was added with mixing:

| | Wt% |
|---|---|
| Chicken skin | 44 |
| Water | 44 |
| Soy isolate | 11 |
| Salt | 1 |

The dry stabiliser composition was added and mixed thoroughly. Rusk was added with mixing followed by seasoning. A vacuum was applied to the mixture to consolidate the structure following which the chicken mixture was chilled to -3°C and formed into shaped pieces.

In the meantime, an aqueous pre-coating composition was prepared from a dry mix having the following composition:

| | Wt% |
|---|---|
| Modified starch (Thermflo) | 35 |
| Thickener (Methocel A4M) | 25 |
| Xanthan gum | 25 |
| Egg albumen | 15 |

The mixture was dissolved in water to form a 1% solution using a CFS Scanbrine mixer with paddle agitation. The solution was left to stand for 24 hours before being applied to the impregnated substrate pieces using a tempura type batter applicator in which the substrate pieces was dipped. To prevent the formation of bubbles in the aqueous pre-coating composition anti foaming agents can be used.

A fine crumb having a mesh size of less than 1 mm was prepared using the procedure disclosed in WO 2010/001101. This fine crumb was applied to the pre-coated substrate pieces using a CFS Crumbmaster breadcrumb applicator.

The crumbed pieces so produced were coated with the batters described in Examples 1-6. To this end the crumbed pieces were passed through the batter in a tempura batter applicator.

Next, a coarse crumb (particle size 1.5-2.5 mm) was applied to the battered substrate pieces in a second CFS Crumbmaster applicator with slight pressure from a roller.

The coated substrate pieces so obtained were fried in pure, fresh rapeseed oil for 2 minutes 30 seconds approximately at 180-188°C. After frying, the core temperature was approximate 90°C.

The products were quickly transferred from the fryer into a cryogenic freezer by a conveyor belt. On entry into the freezer the core temperature of the substrate pieces was still above 75°C. The frozen products were packaged in airtight bags (six products per bag) that have been evacuated using light vacuum prior to sealing. The packaged product was stored for at least 6 weeks at a temperature of -20 to -22°C.

### Example 8 - Reheating and evaluation

The frozen products described in Example 7 were removed from the freezer after the storage period of at least 10 weeks. The frozen products were prepared for evaluation by an expert panel by heating them in a Whirlpool microwave type VT265/BL. First, the Crisp dish was preheated by pressing the "Crisp" button, selecting a heating period of 2 minutes and pressing the "Start" button. Next, 6 nuggets were placed on the preheated dish, the "Crisp" button was pressed, a heating period of 2.5 minutes was selected and the "Start" button was pressed. After the heating the core temperature of the nuggets was determined in order to ensure that it exceeded 72°C. The heated nuggets were kept for 2 minute under ambient conditions before being presented to the panel.

The reheated products were subjected to blind sensory evaluation by an expert panel. The panel members scored product features such as "crispiness", "mouthfeel", "adhesion" and "taste" on a scale of 1 to 5 (5 representing the best possible score). The average scores obtained for the products made with the batters were used to determine the optimum composition.

All of the formulations of Examples 1 to 4 yielded products which showed excellent crispness of stablisation.

The products of Examples 1, 5 and 6 were compared. Example 1 with 0.0125% alpha-amylose gave the best results, superior to Example 5. Both Examples 1 and 5 were superior to Example 6 which used no enzyme.

## Claims

1. A microwaveable batter composition comprising:
water;
flour;
non-modified starch;
alpha-amylase in a concentration of 500-20,000 MAU per kg of the flour component;
egg protein;
a gelling agent; and
optional other edible ingredients.

2. A microwaveable batter composition as claimed in claim 1, said batter composition being composed of 60-85 wt.% water and 15-10 wt.% dry matter, said batter composition comprising by weight of dry matter:
20-60 wt.% of flour;
20-60 wt.% of non-modified starch;
alpha-amylase in a concentration of 500-20,000 MAU per kg of flour;
5-15 wt.% of egg protein;
0.1 to 5 wt.% of a gelling agent; and
up to 20 wt.% of optional other edible ingredients.

3. A batter composition as claimed in claim 1 or 2, wherein the batter composition contains alpha-amylase in a concentration of 800-12,000 MAU per kg flour.

4. A batter composition according to claim 3, wherein the batter composition contains alpha-amylase in a concentration of 1,200-10,000 MAU per kg flour.

5. A batter composition as claimed in any preceding claim, wherein the batter composition contains alpha-amylase in a concentration of 1,800-8,000 MAU per kg flour.

6. A batter composition as claimed in any preceding claim, wherein the flour is rice flour.

7. A batter composition as claimed in any preceding claim, wherein the batter composition comprises 25% to 50% rice flour by weight of dry matter.

8. A batter composition as claimed in any preceding claim wherein the batter composition comprises 25 to 50 wt% non-modified starch by weight of dry matter.

9. A batter composition as claimed in any preceding claim wherein the non-modified starch is non-modified high amylose starch.

10. A batter composition as claimed in any preceding claim, wherein the weight ratio of flour to non-modified starch is in the range from about 3:5 to about 3:2.

11. A batter composition as claimed in any preceding claim, wherein the batter composition contains about 0.1 % to about 5% by weight of dry matter of a gelling agent selected from the group consisting of: xanthan gum, guar gum, agar gum, gum arabic, locust bean gum, carrageenan and combinations thereof.

12. A batter composition as claimed in claim 11, wherein the gelling agent is guar gum.

13. A method of coating a microwave cookable or reheatable foodstuff comprising the steps of applying a batter composition as claimed in any of the preceding claims to an edible solid substrate, followed by the application of a crumb layer.

14. A method as claimed in claim 13. wherein before the application of the batter composition the edible solid substrate is pre-coated with an aqueous pre-coating composition, said aqueous pre-coating composition comprising 97 to 99.7 wt% water and 0.3 to 3.0 wt% dry matter, said dry matter being composed of:
20 to 40 wt.% starch;
10 to 35 wt.% xanthan gum;
5 to 25 wt.% egg albumen; and
up to 50 wt.% of other ingredients;
followed by application of a crumb layer.

15. A microwave cookable or reheatable food composition comprising a batter composition as claimed in any of claims 1 to 12.
